# EUROPÄISCHE PATENTSCHRIFT

(11) **EP 2 250 388 B1**
(45) Veröffentlichungstag und Bekanntmachung des Hinweises auf die Patenterteilung: **25.04.2012**
(21) Anmeldenummer: 09720538.9
(22) Anmeldetag: 12.02.2009
(51) Int. Cl.: F16D 65/12

(54) **BREMSSCHEIBE MIT ZWISCHEN ZWEI REIBRINGEN ANGEORDNETEN RIPPEN**
BRAKE DISC HAVING RIBS DISPOSED BETWEEN TWO FRICTION RINGS
DISQUE DE FREIN AVEC NERVURES DISPOSÉES ENTRE DEUX ANNEAUX DE FRICTION

(30) Priorität: 12.03.2008 DE 102008013871
(43) Veröffentlichungstag der Anmeldung: 17.11.2010
(73) Patentinhaber: Bayerische Motoren Werke Aktiengesellschaft, 80809 München (DE)
(72) Erfinder: BUCK, Alexander, 80997 München (DE); MANDLMEIER, Stefan, 85764 Oberschleissheim (DE)
(86) Internationale Anmeldenummer: PCT/EP2009/000965
(87) Internationale Veröffentlichungsnummer: WO 2009/112136

(56) Entgegenhaltungen:
- JP-A- 11 257 386
- JP-A- 59 126 124
- US-A1- 2002 084 156

## Beschreibung

Die Erfindung betrifft eine Bremsscheibe mit zwischen zwei Reibringen angeordneten, sich im wesentlichen in Radialrichtung erstreckenden Rippen, die mit ihren im wesentlichen senkrecht zur Oberfläche der Reibringe stehenden Seitenwänden Kühlluftkanäle begrenzen. Zum technischen Umfeld wird beispielshalber auf die EP 1 048 872 B1 und ferner auf die DE 195 37 392 A1 verwiesen.

An Bremsscheiben, insbesondere an doppelwandigen Bremsscheiben stellt zum einen die Kühlung bzw. die Abfuhr der bei einem Bremsvorgang erzeugten Wärme eine hohe Herausforderung dar. Hierfür sind eine Vielzahl von Ausführungsformen bekannt, bei denen durch Rippen oder dergleichen günstig verlaufende Kühlluftkanäle zwischen den beiden Reibringen einer doppelwandigen Bremsscheibe gebildet oder begrenzt werden. Üblicherweise stehen diese Rippen mit ihren die Kühlluftkanäle begrenzenden Seitenwänden senkrecht auf der Oberfläche der Reibringe, so wie dies auch in der erstgenannten EP 1 048 872 B1 gezeigt ist; weiterhin bekannt ist es, die Rippen fachwerkartig unter einem Winkel bspw. in der Größenordnung von 45° gegenüber den Oberflächen der Reibringe geneigt anzuordnen, vgl. bspw. die eingangs zweitgenannte DE 195 37 392 A1.

Ein weiteres Problem können Schwingungen der rotierenden Bremsscheibe darstellen, insbesondere wenn durch diese Schwingungen andere mit der Bremsscheibe zumindest teilweise in Kontakt kommende Bauelemente ihrerseits zu Schwingungen angeregt werden, welche dann unerwünschte Geräusche hervorrufen können. Die beiden als Stand der Technik genannten Schriften beschäftigen sich auch mit dieser Geräusch- und Schwingungsproblematik. Dabei ist in der erstgenannten EP 1 048 872 B1 vorgeschlagen, das schwingungsfähige System "Bremsscheibe" bzw. dessen Eigenfrequenzform dadurch zu verstimmen, dass in einem Reibring mehrere sich in Radialrichtung erstreckende Schlitze eingebracht sind. In der eingangs zweitgenannten DE 195 37 392 A1 wird die Bremsscheibe durch die fachwerkartig geneigt angeordneten Rippen in tangentialer Richtung versteift. Das Dokument JP11257386 wird als nächstliegender Stand der Technik angesehen und offenbart eine Bremsscheibe gemäß den Oberbegriffen der Ansprüche 1 und 2. Vorliegend soll nun für eine hinsichtlich der Kühlungsproblematik grundsätzlich bewährte Bremsscheibe nach dem Oberbegriff des Anspruchs 1 eine weitere effektive Maßnahme zur schwingungstechnischen Modifikation des schwingungsfähigen Systems "Bremsscheibe" aufgezeigt werden, wobei diese Maßnahme nicht den in der genannten EP 1 048 872 B1 enthaltenen Nachteil einer mechanischen Schwächung der Bremsscheibe, der sich bei diesem bekannten Stand der Technik aufgrund der dort vorgeschlagenen Schlitze im Reibring einstellt, zeigen soll.

Diese Aufgabe wird durch die Merkmale der Ansprüche 1 und 2 gelöst. Es wurde erkannt, dass zur Erreichung des gewünschten Ziels, Geräusche, insbesondere Quietschgeräusche erzeugende Schwingungen einer Bremsscheibe nach dem Oberbegriff des Anspruchs 1 zu vermeiden, bereits eine relativ geringe System-Modifikation ausreichend ist. Eine solche geringe schwingungstechnische Modifikation wird erzielt, wenn nur eine oder einige der Rippen bzw. wenige Rippen zumindest eine geneigte Seitenwand aufweisen, wobei hierdurch dann, wenn die (in Richtung senkrecht zu den Seitenwänden gemessene) Dicke der Rippe nicht verringert wird, die Steifigkeit des Systems "Bremsscheibe" nennenswert erhöht wird. Diese Steifigkeitserhöhung ist bereits dann feststellbar, wenn nur eine oder wenige Rippen entweder selbst geneigt sind, was bedeutet, dass deren beide Seitenwände zueinander parallel schräg zur und nicht senkrecht auf der Oberfläche der Reibringe stehen, oder wenn nur eine der beiden Seitenwände von einer oder wenigen Rippen gegenüber den benachbarten senkrecht stehenden Rippen geneigt ist, wobei die Rippe als solche sozusagen einseitig geneigt ist.

Weiterhin wurde erkannt, dass sich mit der hier vorgeschlagenen Anzahl von einer oder zwei oder drei oder fünf gegenüber der Mehrzahl von (zu den Reibringen) senkrechten Rippen geneigten Rippe(n) bzw. von Rippen mit zumindest einer geneigten Seitenwand an Bremsscheiben für Personenkraftwagen, die folglich Abmessungen einer bestimmten Größenordnung und eine Gesamtzahl von Rippen ebenfalls in einer bestimmten Größenordnung (im Bereich von 40 bis 60 Rippen) besitzen, beste Resultate ergeben. Hingegen wird mit vier oder sechs geneigten Rippen entweder bei im wesentlichen regelmäßiger Verteilung über der Oberfläche der Reibringe keine ausreichende Modifikation des schwingungsfähigen Systems "Bremsscheibe" erzeugt oder es werden bei signifikanter Ungleichverteilung derselben unvertretbar hohe Unwuchten in der Bremsscheibe erzeugt, die nicht mehr einfach ausgleichbar sind.

Es zeichnet sich eine erfindungsgemäße Bremsscheibe mit wenigen geneigten Rippen bzw. mit wenigen Rippen mit zumindest einer geneigten Seitenwand gegenüber dem Stand der Technik der DE 195 37 392 A1, nach welchem sämtliche Rippen fachwerkartig geneigt angeordnet sind, durch geringeres Gewicht und geringeren Herstellungsaufwand aus.

Es kann sich bei zumindest einer der Rippen mit zumindest einer geneigten Seitenwand die in zur Seitenwand senkrechten Richtung gemessene Rippen-Dicke von der Dicke der senkrecht stehenden Rippen unterscheiden, wobei die geneigte Rippe oder die geneigten Rippen entweder dicker als die senkrecht stehenden Rippen ausgebildet sein kann oder können, was zu einer intensiveren schwingungstechnischen Modifikation des schwingungsfähigen Systems "Bremsscheibe" führt, oder geringfügig dünner als die senkrecht stehenden Rippen ausgeführt sein kann oder können. Im letztgenannten Fall wird die Auslegung derart getroffen werden, dass die Masse einer geneigten Rippe, deren Oberfläche naturgemäß größer als diejenige einer senkrechten Rippe ist, gleich der Masse einer senkrechten Rippe ist, so dass durch eine oder wenige solche(r) geneigte(n) Rippe(n) keine nennenswerte Unwucht der Bremsscheibe hervorgerufen wird.

Hinsichtlich möglicher Schwingungsanregungen besonders wirkungsvoll modifiziert ist das schwingfähige System "Bremsscheibe", wenn im Falle von zwei oder drei oder fünf Rippen, von denen zumindest eine Seitenwand gegenüber den senkrecht stehenden Rippen geneigt ist, die zwischen diesen geneigten Rippen (mit geneigter Seitenwand) eingeschlossenen Winkel nicht alle gleich sind. Die entsprechenden geneigten Rippen sind somit unregelmäßig über der Oberfläche der Reibringe verteilt angeordnet. Eine aus einer solchen Ungleichverteilung von Rippen mit geneigter Seitenwand resultierende Unwucht kann dabei durch Materialanhäufung insbesondere an geeignet ausgewählten senkrecht stehenden Rippen, die vorzugsweise den geneigten Rippen bezüglich des Bremsscheiben-Mittelpunkts gegenüberliegen, im wesentlichen aufgehoben sein.

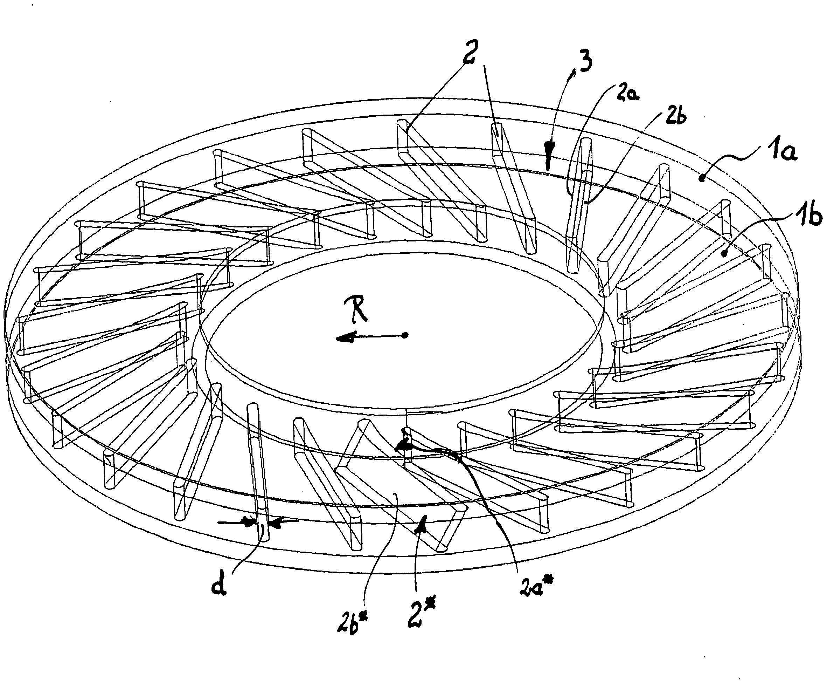

Die beigefügte einzige Figurendarstellung zeigt ein Beispiel einer erfindungsgemäßen Bremsscheibe in einer quasi-räumlichen stark vereinfachten Darstellung, wobei die einzelnen Bestandteile dieser Bremsscheibe abweichend von der Realität durchsichtig dargestellt sind. Dabei ist mit der Bezugsziffer 1a der obere Reibring und mit der Bezugsziffer 1b der untere Reibring einer innenbelüfteten Bremsscheibe eines Kraftfahrzeugs gekennzeichnet. In grundsätzlich üblicher Weise sind zwischen diesen beiden mit gleicher Rotationsachse parallel zueinander angeordneten Reibringen 1a, 1b eine Vielzahl von sich annähernd in Radialrichtung R von innen (= der Rotationsachse zugewandte Bereich) nach außen (= Außenumfang der Bremsscheibe) erstreckenden Rippen 2 vorgesehen. Jeweils zwei einander benachbarte Rippen 2 begrenzen einen zwischen den beiden Reibringen 1a, 1b verlaufenden Kühlluftkanal 3.

Im gezeigten Ausführungsbeispiel ist eine dieser Rippen 2, nämlich die mit der Bezugsziffer 2* gekennzeichnete Rippe etwas anders angeordnet als die übrigen Rippen 2. Während nämlich alle Rippen 2 mit Ausnahme der Rippe 2* im wesentlich senkrecht zu den Oberflächen der Reibringe 1a, 1b stehende Seitenwände 2a, 2b aufweisen, schließen die beiden Seitenwände 2a*, 2b* der Rippe 2* mit den Oberflächen der Reibringe 1a, 1b einen sich von 90° nennenswert unterscheidenden Winkel ein und sind somit gegenüber den anderen Rippen 2 geneigt angeordnet. Mit den Reibringen 1a bzw. 1b verbunden ist diese geneigte Rippe 2* mit den geneigten Seitenwänden 2a*, 2b* jedoch in gleicher Weise wie die anderen Rippen 2.

Die weiteren vor der Figurbeschreibung angeführten Abwandlungen sind in dieser Figur nicht dargestellt, jedoch ist des besseren Verständnisses wegen für eine Rippe 2 noch deren in der vorhergehenden Ausführungen erwähnte Dicke d dargestellt.

## Patentansprüche

1. Bremsscheibe mit zwischen zwei Reibringen (1a, 1b) angeordneten, sich in Radialrichtung (R) erstreckenden Rippen (2), die mit ihren senkrecht zur Oberfläche der Reibringe (1a, 1b) stehenden Seitenwänden (2a, 2b) Kühlluftkanäle (3) begrenzen, wobei zumindest eine der Seitenwände (2a*, 2b*) von einigen Rippen (2*) gegenüber den senkrecht stehenden Rippen (2) geneigt ist,
**dadurch gekennzeichnet, dass** zumindest eine der Seitenwände von nur einer oder nur zwei oder nur drei oder nur fünf Rippen gegenüber den auf den Reibringen senkrecht stehenden Rippen geneigt ist, und dass sich bei den Rippen (2*) mit zumindest einer geneigten Seitenwand (2a*, 2b*) die in zur Seitenwand senkrechten Richtung gemessene Rippen-Dicke von der Dicke (d) der senkrecht stehenden Rippen (2) solchermaßen unterscheidet, dass die Masse einer geneigten Rippe gleich der Masse einer senkrechten Rippe ist.

2. Bremsscheibe mit zwischen zwei Reibringen (1a, 1b) angeordneten, sich in Radialrichtung (R) erstreckenden Rippen (2), die mit ihren senkrecht zur Oberfläche der Reibringe (1a, 1b) stehenden Seitenwänden (2a, 2b) Kühlluftkanäle (3) begrenzen, wobei zumindest eine der Seitenwände (2a*, 2b*) von einigen Rippen (2*) gegenüber den senkrecht stehenden Rippen (2) geneigt ist,
**dadurch gekennzeichnet, dass** von nur zwei oder nur drei oder nur fünf Rippen zumindest eine Seitenwand (2a*, 2b*) gegenüber den senkrecht stehenden Rippen (2) geneigt ist, und dass die zwischen diesen Rippen (2*) mit geneigter Seitenwand eingeschlossenen Winkel nicht alle gleich sind, und dass eine durch diese Ungleichverteilung von Rippen (2*) mit geneigter Seitenwand resultierende Unwucht durch Materialanhäufung an geeignet ausgewählten senkrecht stehenden Rippen (2) aufgehoben ist.

## Claims

1. A brake disc with ribs (2), which are arranged between two friction rings (1a, 1b), which extend in the radial direction (R) and which, with their side walls (2a, 2b) perpendicular to the surface of the friction rings (1a, 1b), define cooling air ducts (3), at least one of the side walls (2a*, 2b*) of some ribs (2*) being inclined relative to the perpendicular rib-s (2), **characterised in that** at least one of the side walls of only one or only two or only three or only five ribs is inclined relative to the ribs perpendicular to the friction rings, and **in that** in the ribs (2*) with at least one inclined side wall (2a*, 2b*), the rib thickness measured in the direction perpendicular to the side wall differs from the thickness (d) of the perpendicular ribs (2) such that the mass of an inclined rib is equal to the mass of a perpendicular rib.

2. A brake disc with ribs (2), which are arranged between two friction rings (1a, 1b), which extend in the radial direction (R) and which, with their side walls (2a, 2b) perpendicular to the surface of the friction rings (1 a, 1 b), define cooling air ducts (3), at least one of the side walls (2a*, 2b*) of some ribs (2*) being inclined relative to the perpendicular ribs (2), **characterised in that** at least one side wall (2a*, 2b*) of only two or only three or only five ribs is inclined relative to the perpendicular ribs (2), and **in that** the angles enclosed between these ribs (2*) with an inclined side wall are not all the same, and **in that** an imbalance resulting from this non-uniform distribution of ribs (2*) with an inclined side wall is eliminated by adding material on suitably selected perpendicular ribs (2).

## Revendications

1. Disque de frein comportant des nervures (2) s'étendant dans la direction radiale (R) entre deux anneaux de friction (1a, 1b), ces nervures ayant des parois latérales (2a, 2b) perpendiculaires à la surface des anneaux de friction (1a, 1b) pour délimiter des canaux de ventilation (3),
- au moins l'une des parois latérales (2a*, 2b*) de quelques nervures (2*) est inclinée par rapport aux nervures perpendiculaires (2), disque de frein **caractérisé en ce qu'**
- au moins l'une des parois latérales de seulement une ou de seulement deux ou de seulement trois ou de seulement cinq nervures, est inclinée par rapport aux nervures perpendiculaires aux anneaux de friction, et
- les nervures (2*) ayant au moins une paroi latérale inclinée (2a*, 2b*), ont une épaisseur mesurée dans la direction perpendiculaire à la paroi latérale qui diffère de l'épaisseur (d) des nervures (2) perpendiculaires à la paroi latérale de façon que la masse d'une nervure inclinée soit égale à la masse d'une nervure perpendiculaire.

2. Disque de frein comportant des nervures (2) dirigées dans la direction radiale (R) entre deux anneaux de friction (1a, 1b), et dont les parois latérales (2a, 2b) perpendiculaires à la surface des anneaux de friction (1a, 1b) délimitent des canaux de ventilation (3),
- au moins l'une des parois latérales (2a*, 2b*) de quelques nervures (2*) est incliné par rapport aux nervures (2) perpendiculaires, **caractérisé en ce que**
- la paroi latérale (2a*, 2b*) de seulement deux ou de seulement trois ou de seulement cinq nervures est inclinée par rapport aux nervures perpendiculaires (2), et
- les angles entre ces nervures (2*) à paroi inclinée ne sont pas tous égaux, et
- le balourd résultant de la répartition irrégulière des nervures (2*) à paroi latérale inclinée, est compensé par des nervures (2) perpendiculaires, choisies de manière appropriée.
